# FASCICULE DE BREVET EUROPEEN

(11) **EP 1 805 484 B1**
(45) Date de publication et mention de la délivrance du brevet: **23.05.2018**
(21) Numéro de dépôt: 05799551.6
(22) Date de dépôt: 13.10.2005
(51) Int. Cl.: G01C 21/34

(54) **PROCEDE ET DISPOSITIF DE CALCUL D'ITINERAIRE AVEC ELIMINATION PROGRESSIVE DES DONNEES CORRESPONDANT AU RESEAU ROUTIER**
ROUTENKALKULATIONSEINRICHTUNG UND VERFAHREN MIT PROGRESSIVER BESEITIGUNG VON DEM STRASSENNETZ ENTSPRECHENDEN DATEN
ROUTE CALCULATION DEVICE AND METHOD WITH PROGRESSIVE ELIMINATION OF DATA CORRESPONDING TO THE ROAD NETWORK

(30) Priorité: 18.10.2004 FR 0411029
(43) Date de publication de la demande: 11.07.2007
(73) Titulaire: Compagnie Générale des Etablissements Michelin, 63000 Clermont-Ferrand (FR)
(72) Inventeur: HAYOT, Pierre, F-92140 Clamart (FR); LEGRAND, Christophe, F -78330 Fontenay Le Fleury (FR)
(74) Mandataire: Dequire, Philippe Jean-Marie Denis
(86) Numéro de dépôt international: PCT/EP2005/011005
(87) Numéro de publication internationale: WO 2006/042687

(56) Documents cités:
- EP-A- 0 854 353
- EP-A- 0 953 954
- WO-A-03/058170
- WU YIMIN ET AL: "A shortest path algorithm based on hierarchical graph model" INTELLIGENT TRANSPORTATION SYSTEMS, 2003. PROCEEDINGS. 2003 IEEE OCT. 12-15, 2003, PISCATAWAY, NJ, USA,IEEE, vol. 2, 12 octobre 2003 (2003-10-12), pages 1511-1514, XP010672691 ISBN: 0-7803-8125-4

## Description

La présente invention concerne un procédé et un dispositif permettant d'établir des itinéraires, de façon rapide, précise et efficace, en utilisant, en fonction des différentes étapes de calcul, un nombre différent de données de base. Ainsi, au fur et à mesure de l'avancement du calcul, une hiérarchisation des données est effectuée, de façon faire en sorte que certaines données ne soient plus considérées pour les calculs subséquents. Les itinéraires établis peuvent servir à l'établissement de feuilles de routes (liste d'instructions pour se déplacer d'un point à un autre) et/ou à produire des illustrations cartographiques du trajet calculé.

Depuis quelques années déjà, les fournisseurs de données digitales représentant des réseaux routiers (ou autre réseaux de transport tels que ferroviaires ou maritimes) sont confrontés à une inflation considérable du nombre de données. Cet accroissement provient de plusieurs sources. Les réseaux routiers se densifient, s'agrandissent, etc. Les données relatives aux réseaux sont de plus en plus nombreuses, car il est de plus en plus utile et pertinent de considérer d'autres paramètres que les seuls noeuds, tronçons et leurs coordonnées spatiales. Par exemple, des indications complémentaires telles que des limites de vitesse, des indications de direction, de localisation, d'informations touristiques, etc, sont de plus en plus appréciées des utilisateurs. Par ailleurs, toutes ces données sont de plus en plus sujettes à des changements fréquents ou temporaires. Les bases de données sont donc de plus en plus lourdes, ce qui a un impact négatif sur les temps d'accès et de calcul. Par ailleurs, les mises à jours des bases de données sont de plus en plus fastidieuses.

Les utilisateurs de données, par exemple afin de produire des itinéraires, que ce soit pour leur propre compte ou pour celui de tiers, sont de plus en plus confrontés aux difficultés liées à l'accroissement du nombre des données, et à l'impact négatif que cela représente sur le temps nécessaire afin de générer un itinéraire, suite à une requête d'un utilisateur. Cet aspect est particulièrement critique pour les fournisseurs à distance d'itinéraires, qui doivent faire face à une croissance majeure tant du nombre d'utilisateurs que du nombre de requêtes par utilisateur. Il est donc de plus en plus difficile de maintenir les temps et les niveaux de sollicitation des outils à des niveaux acceptables.
Le document WO03058170 décrit un procédé de calcul de coût minimal pour un réseau routier numérique, comprenant des noeuds reliés entre eux par des segments. Chacun des segments comporte un coût. Le calcul effectué est basé sur deux graphes partant de deux points. L'exploration des noeuds et segments entre les points de départ et d'arrivée est basée sur l'élimination progressive de segments dont le niveau d'importance est inférieur à un seuil afin de calculer un itinéraire optimum avec un temps de calcul minimum. Lorsque les deux graphes permettent de définir un point commun, le calcul est interrompu.
Le document EP 0854353 décrit un procédé de calcul d'itinéraire entre deux points utilisant l'algorithme A*. L'exploration du graphe de réseau routier est basée sur un principe similaire au document WO03058170. Pour pallier ces différents inconvénients, l'invention prévoit un procédé de détermination d'itinéraires conforme à la revendication 1 et un logiciel exécutable par un système informatique, selon la revendication 7, pour la mise en oeuvre du procédé de la revendication 1. Pour former une maille, on comptabilise les noeuds d'importance Is ou plus. Ce qui signifie qu'une maille n'est pas forcément homogène en terme de valeur d'importance.
On considère une maille fermée lorsque tous les noeuds appartenant au contour de l'exploration sont d'importance égale ou supérieure au niveau d'importance que l'on souhaite éliminer. Dans le cas de tronçons de type « cul de sac », bien souvent leurs noeuds extrémités ne permettent pas de fermer une maille, cependant, à un moment donné ceux-ci sortiront naturellement de l'arbre d'exploration.
Grâce à ce procédé, on obtient une façon judicieuse de maîtriser la quantité de données à traiter, tout en trouvant un équilibre entre le temps et les capacités de calcul nécessaires, et la qualité des itinéraires produits, pour laquelle les exigences sont de plus en plus élevées. Ce type d'élimination correspond par ailleurs à une logique qui convient bien aux utilisateurs d'itinéraires puisqu'elle permet d'emprunter les réseaux de moindre importance au départ et à l'arrivée, et les réseaux plus importants entre ces deux portions, lorsque la longueur du trajet le permet. Il en résulte une simplification structurelle des itinéraires proposés. Par ailleurs, puisqu'il existe une relation directe (y=f(x)) entre le nombre de tronçons explorés pendant le parcours du graphe et le temps nécessaire au calcul complet, la réduction du nombre de tronçons à explorer sur une portion du parcours permet de réaliser des gains considérables de temps et de taux de sollicitation des ressources, comme par exemple l'occupation de l'espace mémoire.
Selon les modes de réalisation, l'indice d'importance de départ peut être soit fixé préalablement, soit établi à une valeur la plus basse possible en fonction des indices correspondant aux noeuds présents dans la zone du point de départ. Par exemple, avec une valeur correspondant à l'indice de la maille de plus faible indice identifiable autour du point de départ. Selon un mode de réalisation avantageux, un indice maximal Im est soit préétabli, soit fourni par l'utilisateur. Cet indice permet de limiter le processus d'élimination à un stade donné. Par exemple, selon un mode de réalisation avantageux, pour une échelle d'indice de 1 à 20, Id vaut 8 et Imax vaut 13. Cet exemple permet une élimination fort avantageuse, tout en conservant suffisamment d'éléments pour obtenir un excellent niveau de qualité.

Selon le mode de réalisation envisagé, les phases d'élimination peuvent être réalisées soit par étape, par exemple après chaque passage à un niveau de maille supérieur, ou après plusieurs changements de niveaux, de façon groupée.

On considère que lorsque l'on est sur le graphe sur lequel on a procédé à l'élimination souhaitée, appelé graphe de vol, le réseau secondaire est effectivement inutile jusqu'aux abords de l'arrivée. Dans les cas où l'utilisateur souhaite obtenir l'itinéraire le plus court entre deux points, la présente invention implique qu'un itinéraire calculé n'est pas forcément le plus court. Il s'agit plutôt d'un compromis correspondant à l'itinéraire le plus court empruntant les grandes routes, ou favorisant le réseau d'indice supérieur.

Pour conserver des itinéraires logiques, il est préférable que le graphe routier utilisé pendant le calcul réponde à des contraintes de connexité par niveau d'importance et particulièrement pour le graphe de vol.

La méthode selon l'invention, consistant à ignorer une partie du réseau routier permet de réduire de façon considérable le nombre de tronçons à analyser (par exemple, jusqu'à près de dix fois moins selon un mode de réalisation envisagé) tout en permettant d'obtenir un résultat comparable à un calcul effectué sans élimination.

On remarque bien, avec ce principe, que le résultat de cette méthode permet une adaptation dépendante du terrain, c'est-à-dire une élimination rapide dans les zones denses (villes) et une élimination plus lente dans les parties de faible densité.

De manière avantageuse, on explore les noeuds de façon à former, de façon progressive, des mailles dont l'indice augmente de façon régulière.
De manière avantageuse, l'indice d'une maille subséquente correspond à l'indice suivant celui de la maille immédiatement précédente. Il peut s'agir d'un incrément régulier ou pas. Par exemple, un incrément de 1 (ou autre valeur) entre des valeurs de 1 à 20. La valeur de l'incrément peut aussi être une fonction quelconque.
De manière avantageuse, l'indice d'importance d'un noeud correspond à l'indice le plus élevé des tronçons incidents.
Selon un mode de réalisation avantageux, afin de déterminer l'itinéraire, on identifie une pluralité de routes potentielles à partir desquelles un itinéraire est élu en fonction de critères donnés.
L'itinéraire préférentiel est de préférence celui pour lequel le coût total entre le point de départ et le point d'arrivée est optimal. Bien évidemment, l'établissement de ce coût peut être fait en tenant compte d'un nombre de paramètres plus ou moins important, selon le cas. Par exemple, on peut considérer des paramètres tels que la distance parcourue, les péages, le temps de parcours, l'économie d'essence, etc. Chacun de ces différents paramètres peut prendre une importance plus ou moins déterminante, en associant à chacun des pondérations plus ou moins importantes, selon le cas, par exemple en fonction d'un ou plusieurs souhaits de l'utilisateur.
Selon un mode de réalisation avantageux, l'identification de la pluralité de routes est effectuée en sélectionnant un premier élément de modélisation du réseau routier, de préférence un noeud, à proximité du point de départ (α) et un second élément de modélisation du réseau routier, de préférence un noeud, à proximité du point d'arrivée (β), en identifiant une pluralité de routes, chacune consistant en une pluralité d'éléments de route reliés du premier élément au second élément, et en recherchant au moins un élément intermédiaire pour chacune desdites routes dans ledit ensemble d'éléments de modélisation de réseau routier.

De manière avantageuse, l'exploration des noeuds est réalisée à l'aide de l'algorithme de Dijkstra. Selon un autre mode de réalisation avantageux, l'exploration des noeuds est réalisée à l'aide de l'algorithme de FORD.

L'invention prévoit également un logiciel comprenant des éléments de code programmés pour la mise en oeuvre du procédé préalablement décrit, lorsque ledit logiciel est chargé dans un système informatique et exécuté par ledit système informatique.

Ce logiciel peut être sous forme d'un produit enregistré sur un support lisible par un système informatique, comprenant des éléments de code programmés tel qu'énoncé ci-dessus.

L'invention prévoit par ailleurs un dispositif de calcul d'itinéraire, comprenant:
- une unité d'entrée des données, destinée à recevoir, les données associées à un point de départ α et celles associées à un point d'arrivée β;
- un accès à une unité de stockage comportant un ensemble d'éléments de modélisation d'un réseau routier;
- une unité de calcul agencée pour identifier une pluralité de routes permettant chacune de relier les points de départ et d'arrivée;
- des moyens d'élimination, permettant d'une part d'identifier au moins un niveau ou seuil d'élimination, et d'autre part d'éliminer au moins une portion des données de l'ensemble de base dont l'indice est inférieur audit niveau ou seuil d'élimination.

Selon un mode de réalisation avantageux, le dispositif comporte une unité de guidage, agencée de façon à générer des informations de guidage en fonction des éléments cartographiques de la route sélectionnée.

L'invention prévoit enfin un système informatique comprenant un dispositif tel que préalablement décrit.

Tous les détails de réalisation sont donnés dans la description qui suit, complétée par les figures 1 à 15 dans lesquelles :
- les figures 1 à 6 illustrent le principe connu en soit de l'algorithme de Dijkstra ;
- la figure 7 illustre un exemple d'une maille ;
- la figure 8 illustre le principe de l'héritage ;
- les figures 9 et 10 montrent un exemple de formation d'une maille d'un certain niveau, afin de pouvoir éliminer les données de niveau inférieur ;
- la figure 11 illustre un autre exemple d'une maille ;
- les figures12 et 13 illustrent un exemple de propagation, respectivement sans et avec élimination ;
- les figures 14 et 15 illustrent un exemple de propagation en zone de départ, respectivement sans et avec élimination.

Dans la présente description, les termes suivants sont utilisés notamment avec les significations suivantes :
On désigne « noeud » un point d'intersection entre un premier élément de réseau cartographique ou routier (ou autre réseau) et un second élément d'un tel réseau, notamment l'intersection entre une pluralité de voies routières. Un noeud désigne également un point de changement physique ou qualitatif d'un tronçon, comme par exemple un passage de deux à trois voies, un changement de la limitation de vitesse, une zone (même temporaire) faisant l'objet de travaux, un point de rupture tel une frontière, etc.

On désigne « tronçon », une portion de voie entre deux noeuds.

On désigne un « itinéraire » un sous-ensemble de points issus des éléments de modélisation d'un réseau routier, créant un lien entre des données de façon à leur permettre de modéliser ou représenter un trajet ou parcours sur ledit réseau routier permettant de relier un point de départ et un point d'arrivée. Ce sous-ensemble est constitué par les données relatives aux tronçons permettant de relier le départ et l'arrivée. Par données relatives aux tronçons, on entend les identifications, les longueurs des tronçons et les coordonnées spatiales.

Ce sous-ensemble peut servir à représenter ledit itinéraire sous différentes formes, par exemple au moyen d'une représentation graphique, de préféren ce sous la forme d'une carte comprenant le point de départ, le point d'arrivée, et les tronçons formant ledit itinéraire, ou sous la forme d'une « feuille de route » ou liste d'instructions, comportant une énumération ou suite d'instructions écrites ou représentées par des pictogrammes, expliquant à un éventuel conducteur d'un véhicule, les différentes étapes à suivre pour effectuer ledit itinéraire.

Différentes approches ainsi que différents algorithmes permettent aujourd'hui de procéder à des calculs d'itinéraires. La présente invention est susceptible d'être utilisées avec un grand nombre d'entre elles. Par exemple, le procédé selon l'invention convient particulièrement à l'algorithme de Dijkstra, largement répandu dans le domaine des calculs d'itinéraires.

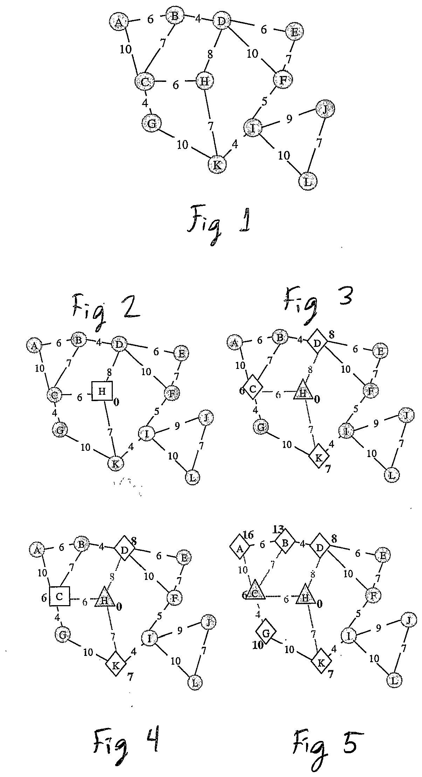

Les figures 1 à 6 permettent d'illustrer le principe de l'algorithme de Dijkstra. Soit un graphe, tel que celui de la figure 1, représentant le réseau routier, comportant des noeuds reliés entre eux par des tronçons valorisés (distance entre les noeuds) :
On choisit un point de départ (par exemple H) ; l'algorithme de Dijkstra permet de connaître pour chaque noeud la distance la plus courte entre ce noeud et H. Les figures 1 à 6 permettent d'illustrer le fonctionnement de l'algorithme :
Première étape (figure 2) : on valorise à 0 le noeud de départ.
Deuxième étape (figure 3) : on emprunte chaque tronçon quittant le départ et on valorise les noeuds rencontrés.
Troisième étape (figure 4) : on sélectionne, parmi les noeuds valorisés, celui de moindre coût (C).
Quatrième étape (figure 5): on emprunte tous les tronçons partant du point sélectionné, et on valorise les noeuds rencontrés (première valorisation ou réactualisation).

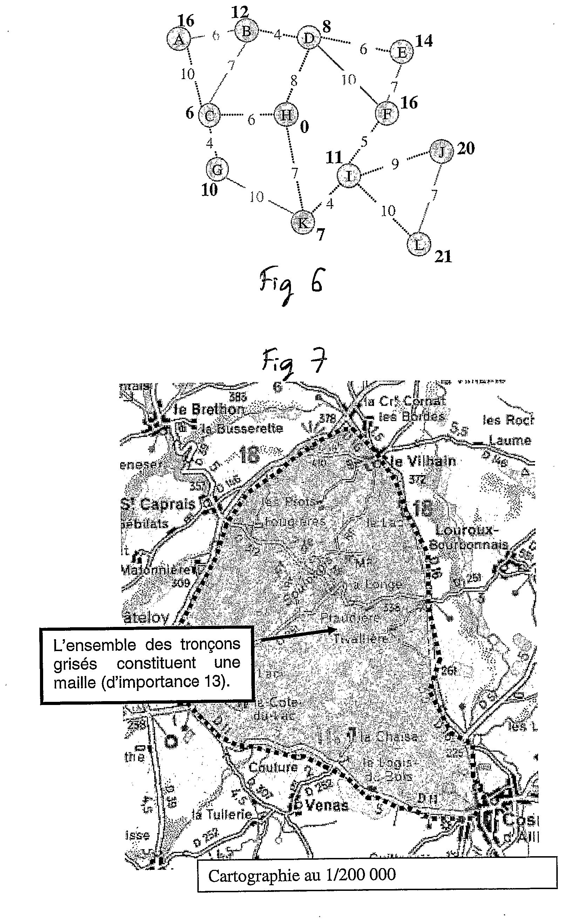

Ainsi de suite, on sélectionnera ensuite K puis, au fur et à mesure, tous les noeuds. Tant qu'un noeud n'est pas définitivement évalué, sa valorisation peut changer. Par exemple, B sera valorisé à 12 via D. A la fin, on obtient le résultat présenté à la figure 6.

Pour le calcul d'itinéraires, dans un exemple ne faisant pas partie de l'invention, on part du point de départ α et on s'arrête dès que le noeud d'arrivée est définitivement évalué. On a ainsi obtenu le meilleur itinéraire. Afin de calculer différents types d'itinéraires possibles, le coût associé au tronçon peut être associé à différents paramètres tels que par exemple :
- le temps de parcours (itinéraire le plus rapide) ;
- la longueur (itinéraire le plus court) ;
- ou une combinaison des deux.

Pour conserver un niveau de performance acceptable, la solution de l'invention consiste à ignorer une partie du graphe pendant le calcul, tout en continuant à desservir l'ensemble des points du réseau routier (villes, adresses, POI,...) de façon cohérente.

Globalement, le concept de l'invention consiste à se baser sur l'existence d'un graphe principal, dit « graphe de vol », représentatif des routes importantes et très limité en nombre d'objets, que l'on rejoint depuis les points de départ et d'arrivée en empruntant un graphe « secondaire » contenant l'ensemble des petites routes. Une fois le graphe de vol atteint, on ignore le graphe secondaire jusqu'aux abords de l'arrivée. Ces différents paliers sont basés sur l'importance du réseau routier. Celle-ci, se décline, dans les données couramment utilisées par la demanderesse, sur une plage de valeurs théoriques allant de 1 à 20. Dans les faits, seule les valeurs de 8 à 20 sont significatives. Le tableau suivant présente cet exemple de répartition des indices d'importance vis à vis de la typologie du réseau routier :

| **Importance** | **Type de routes** |
|---|---|
| **20** | Très grand réseau : type autoroutier |
| **19** | |
| **18** | |
| **17** | Grand réseau : routes nationales |
| **16** | |
| **15** | |
| **14** | Réseau régional : routes départementales |
| **13** | |
| **12** | Réseau local |
| **11** | |
| **10** | Réseau urbain |
| **9** | |
| **8** | |

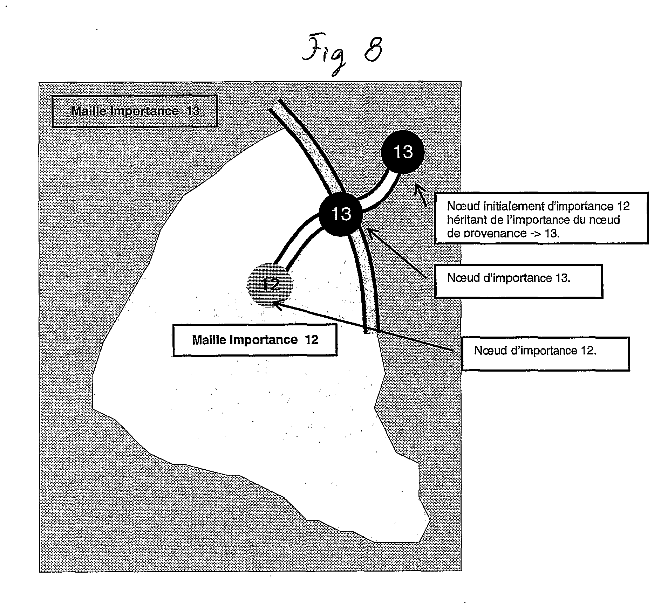

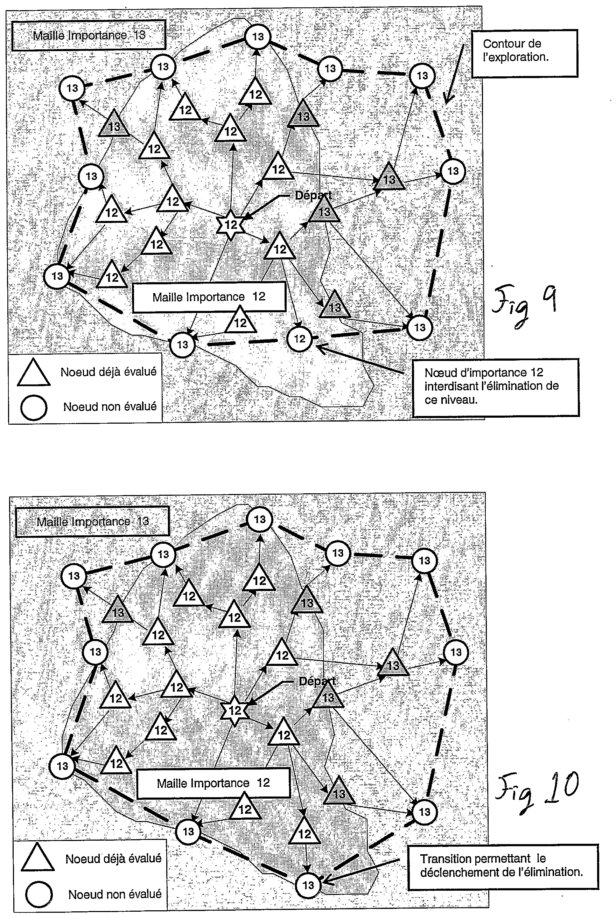

La problématique restante consiste à définir la méthode pour identifier le seuil à partir duquel on choisit de rester sur le graphe de vol en prenant en compte le fait que la densité du réseau routier n'est pas homogène. Le choix du mode d'élimination s'est porté sur une méthode « adaptative » permettant d'une part de prendre en compte la densité du réseau routier, et « progressive » pour éliminer les réseaux par paliers successifs (en fonction du niveau d'importance : de 1 à 20).
D'un point de vue du principe, on considère que le réseau routier est un ensemble de mailles d'importances différentes et que tous les tronçons qui constituent une maille sont de même importance, tel que montré dans l'exemple de la figure 7.
De manière préférentielle, on considère que l'importance d'une intersection est au moins équivalente à celle du noeud de provenance, sinon on la rehausse (héritage). La figure 8 présente ce mécanisme d'héritage.
On fait le choix d'éliminer un niveau de réseau à partir du moment où la totalité des noeuds qui constituent le contour de l'exploration du réseau sont d'un niveau d'importance supérieur. Les graphiques des figures 9 et 10 mettent en évidence la propagation du calcul et le contour de l'exploration.
Les noeuds représentés par des cercles aux figures 9 et 10, constituant le contour de l'exploration, ne sont pas tous du niveau d'importance requis pour éliminer le niveau 12. On continue donc à analyser les tronçons de cette importance. A la figure 10, le dernier noeud interdisant l'élimination a été évalué et a permis d'atteindre une nouvelle intersection de niveau d'importance suffisant. A partir de cet instant, les tronçons d'importance inférieure à 13 ne seront plus examinés.

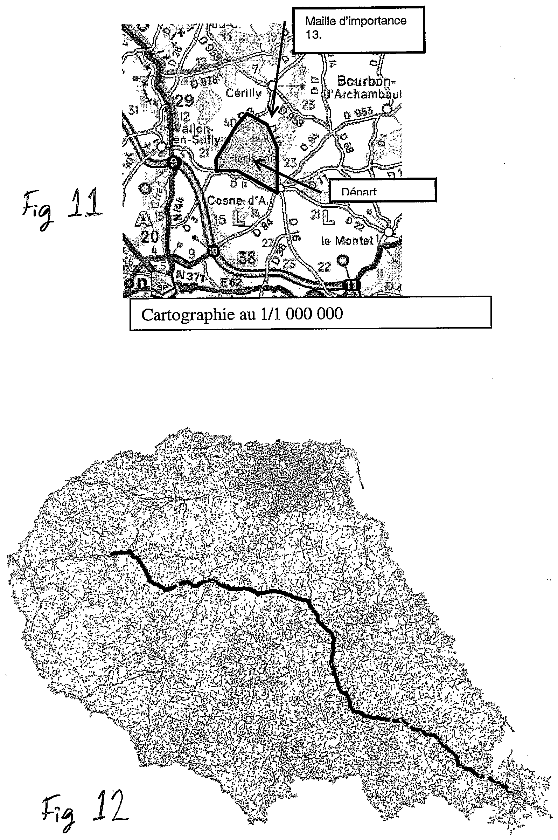

On peut tout à fait comparer ce principe d'élimination à une sorte de changement d'échelle en cours de calcul, comme l'illustre l'encart cartographique de la figure 11 qui met en évidence la zone géographique du départ de l'itinéraire ainsi que la maille ayant permis l'élimination du graphe.

La figure 12 présente la propagation d'un calcul d'itinéraire sans élimination sur un trajet Angers / Lyon. L'ensemble du réseau est exploré. Le tracé en gras indique le chemin retenu par le calculateur.

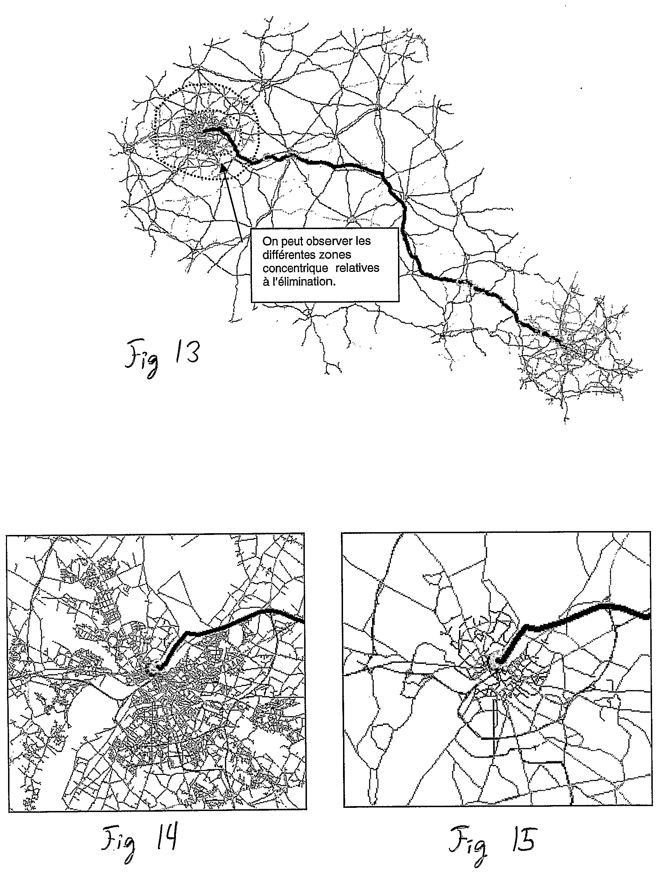

En mettant en oeuvre le mécanisme d'élimination progressive, on obtient le résultat illustré à la figure 13.

En réalisant un itinéraire entre zones de forte densité, on remarque que le réseau de faible importance est très rapidement éliminé. En zoomant sur le point de départ on peut observer de façon plus nette les zones relatives aux niveaux d'élimination, tel que présenté aux figures 14 et 15.

Il est important de noter que ce principe de sélection d'un réseau principal est tout à fait cohérent avec le comportement naturel d'un automobiliste qui cherche à éviter les routes de trop faible importance lors de son déplacement, tout en étant néanmoins contraint de les emprunter au départ et/ou à l'arrivée.

## Revendications

1. Procédé de détermination d'itinéraires entre un point de départ (α) et un point d'arrivée (β) pour un dispositif de calcul d'itinéraire, comprenant:
- une unité d'entrée des données, destinée à recevoir, les données associées à un point de départ et celles associées à un point d'arrivée;
- un accès à une unité de stockage comportant un ensemble d'éléments de modélisation d'un réseau routier constituants un système numérique de cartographie routière constitué d'un ensemble de tronçons et de noeuds possédant chacun leur indice d'importance, lesdits noeuds et tronçons étant agencés de façon à représenter un réseau routier formé d'une pluralité de mailles d'indices d'importance différents, chacune des mailles étant définie par un ensemble de noeuds et de tronçons d'indice donné;
- une unité de calcul agencée pour identifier une pluralité de routes permettant chacune de relier les points de départ et d'arrivée;
- des moyens d'élimination, permettant d'une part d'identifier au moins un niveau ou seuil d'élimination, et d'autre part d'éliminer au moins une portion des données de l'ensemble de base dont l'indice est inférieur audit niveau ou seuil d'élimination ;
ledit procédé comportant les étapes suivantes :
- afin de déterminer l'itinéraire, on identifie une pluralité de routes potentielles à partir desquelles un itinéraire est élu en fonction de critères donnés ;
- l'identification de la pluralité de routes est effectuée en sélectionnant un premier élément de modélisation du réseau routier, de préférence un noeud, à proximité du point de départ, et un second élément de modélisation du réseau routier, de préférence un noeud, à proximité du point d'arrivée, en identifiant une pluralité de routes, chacune consistant en une pluralité d'éléments de route reliés du premier élément au second élément, et en recherchant au moins un élément intermédiaire pour chacune desdites routes dans ledit ensemble d'éléments de modélisation de réseau routier ;
- à l'aide de l'unité de calcul, on explore, par l'entremise des tronçons, les noeuds entourant ledit noeud de départ et ledit noeud d'arrivée de façon à déterminer le coût de chacun de ces noeuds ;
- on poursuit ladite exploration jusqu'à atteindre un itinéraire élu ;
ledit procédé étant **caractérisé par** les étapes suivantes :
a) lors de ladite exploration, on explore les noeuds de façon à identifier les noeuds permettant de former une maille d'indice de départ Id donné ;
b) lorsqu'une maille d'un indice Id est identifiée, à l'aide desdits moyens d'élimination, on élimine les tronçons dont l'indice est inférieur à cet indice Id ;
c) on poursuit l'exploration des noeuds de façon à identifier les noeuds permettant de former une nouvelle maille, dont l'indice Is est supérieur à celui de la maille précédente ;
d) on élimine les tronçons dont l'indice est inférieur à ce nouvel indice Is ;
e) on répète les étapes c et d jusqu'à ce que l'on atteigne un indice maximal Im d'élimination, de sorte qu'on élimine un niveau de réseau à partir du moment où la totalité des noeuds qui constituent le contour de l'exploration du réseau sont d'un indice supérieur au niveau de réseau donné.

2. Procédé de détermination d'itinéraires selon la revendication 1, dans lequel on explore les noeuds de façon à former, de façon progressive, des mailles dont l'indice augmente de façon régulière.

3. Procédé de détermination d'itinéraires selon l'une des revendications 1 ou 2, dans lequel l'indice d'une maille subséquente correspond à l'indice suivant celui la maille immédiatement précédente.

4. Procédé de détermination d'itinéraires selon l'une des revendications précédentes, dans lequel l'indice d'importance d'un noeud correspond à l'indice le plus élevé des tronçons incidents.

5. Procédé de détermination d'itinéraires selon l'une des revendications 1 à 4, dans lequel l'exploration des noeuds est réalisée à l'aide de l'algorithme de Dijkstra.

6. Procédé de détermination d'itinéraires selon l'une des revendications 1 à 4, dans lequel l'exploration des noeuds est réalisée à l'aide de l'algorithme de FORD.

7. Logiciel comprenant des éléments de code programmés pour la mise en oeuvre du procédé selon l'une des revendications précédentes, lorsque ledit logiciel est chargé dans un système informatique et exécuté par ledit système informatique.

8. Logiciel selon la revendication 7, sous forme de produit enregistré sur un support lisible par un système informatique, comprenant des éléments de code programmés.

## Patentansprüche

1. Verfahren zur Routenbestimmung zwischen einem Anfangspunkt (α) und einem Endpunkt (β) für eine Routenkalkulationseinrichtung, umfassend:
- eine Dateneingabeeinheit, die dazu bestimmt ist, die einem Anfangspunkt zugeordneten und die einem Endpunkt zugeordneten Daten zu empfangen;
- einen Zugang zu einer Speichereinheit, umfassend eine Gesamtheit von Elementen zum Modellieren eines Straßennetzes, die Bestandteile eines digitalen Straßenkartensystems sind, das von einer Gesamtheit von Abschnitten und Knoten, die jeweils ihren Wichtigkeitsindex besitzen, gebildet ist, wobei die Konten und Abschnitte derart angeordnet sind, dass sie ein Straßennetz darstellen, das von einer Vielzahl von Gliedern mit unterschiedlichen Wichtigkeitsindizes gebildet ist, wobei jedes der Glieder durch eine Gesamtheit von Knoten und Abschnitten mit gegebenem Index definiert ist;
- eine Recheneinheit, die eingerichtet ist, um eine Vielzahl von Straßen, die es jeweils ermöglichen, die Anfangs- und Endpunkte zu verbinden, zu identifizieren;
- Beseitigungsmittel, die es einerseits ermöglichen, mindestens ein Beseitigungsniveau oder eine Beseitigungsgrenze zu identifizieren, und andererseits, mindestens einen Teil der Daten der Basisgesamtheit, deren Index niedriger als das Beseitigungsniveau oder die Beseitigungsgrenze ist, zu beseitigen;
wobei das Verfahren die folgenden Schritte umfasst:
- um die Route zu bestimmen, Identifikation einer Vielzahl von potentiellen Straßen, aus denen eine Route in Abhängigkeit von gegebenen Kriterien gewählt wird;
- Identifikation der Vielzahl von Straßen durch Auswahl eines ersten Elements zur Modellierung des Straßennetzes, vorzugsweise eines Knotens, in der Nähe des Anfangspunktes und eines zweiten Elements zur Modellierung des Straßennetzes, vorzugsweise eines Knotens, in der Nähe des Endpunktes, wobei eine Vielzahl von Straßen identifiziert wird, die jeweils in einer Vielzahl von Straßenelementen bestehen, die vom ersten Element zum zweiten Element verbunden sind, und wobei mindestens ein Zwischenelement für jede der Straßen in der Gesamtheit von Elementen zur Modellierung des Straßennetzes gesucht wird;
- mit Hilfe der Recheneinheit durch Zwischenschaltung der Abschnitte Erkundung der Knoten, die den Anfangsknoten und den Endknoten umgeben, um die Kosten jedes dieser Knoten zu bestimmen;
- Fortsetzung der Erkundung, bis eine gewählte Route erreicht wird;
wobei das Verfahren durch die folgenden Schritte gekennzeichnet ist:
a) bei der Erkundung werden die Knoten erkundet, um die Knoten zu identifizieren, die es ermöglichen, ein Glied mit einem gegebenen Anfangsindex Id zu bilden;
b) wenn ein Glied mit einem Index Id identifiziert ist, werden mit Hilfe der Beseitigungsmittel die Abschnitte beseitigt, deren Index niedriger als dieser Index Id ist;
c) Fortsetzung der Erkundung der Knoten, um die Knoten zu identifizieren, die es ermöglichen, ein neues Glied zu bilden, dessen Index Is größer als jener des vorherigen Glieds ist;
d) Beseitigung der Abschnitte, deren Index niedriger als dieser neue Index Is ist;
e) Wiederholung der Schritte c und d, bis ein maximaler Beseitigungsindex Im erreicht ist, so dass ein Netzbereich ab dem Zeitpunkt beseitigt wird, zu dem die Gesamtheit der Knoten, die die Kontur der Erkundung des Netzes darstellen, einen größeren Index als der gegebene Netzbereich haben.

2. Verfahren zur Routenbestimmung nach Anspruch 1, bei dem die Knoten erkundet werden, um progressiv Glieder zu bilden, deren Index regelmäßig steigt.

3. Verfahren zur Routenbestimmung nach einem der Ansprüche 1 oder 2, bei dem der Index eines anschließenden Glieds dem Index entspricht, der auf jenen des unmittelbar vorhergehenden Glieds folgt.

4. Verfahren zur Routenbestimmung nach einem der vorhergehenden Ansprüche, bei dem der Wichtigkeitsindex eines Knotens dem höchsten Index der eintreffenden Abschnitte entspricht.

5. Verfahren zur Routenbestimmung nach einem der Ansprüche 1 bis 4, bei dem die Erkundung der Knoten mit Hilfe eines Dijkstra-Algorithmus erfolgt.

6. Verfahren zur Routenbestimmung nach einem der Ansprüche 1 bis 4, bei dem die Erkundung der Knoten mit Hilfe des FORD-Algorithmus erfolgt.

7. Software, umfassend Codeelemente, die für den Einsatz des Verfahrens nach einem der vorhergehenden Ansprüche programmiert sind, wenn die Software in ein Informatiksystem geladen ist und von dem Informatiksystem ausgeführt wird.

8. Software nach Anspruch 7 in Form eines auf einem von einem Informatiksystem lesbaren Träger aufgezeichnetes Produkt, umfassend programmierte Codeelemente.

## Claims

1. Method of determining routes between a point of departure (a) and a point of arrival (β) for a route calculation device, comprising:
- a data input unit, for receiving the data associated with a point of departure and those associated with a point of arrival;
- access to a storage unit comprising a set of road network modelling elements forming a digital road mapping system consisting of a set of segments and nodes each having their importance index, said nodes and segments being put together so as to represent a road network formed of a plurality of meshes of different importance indices, each of the meshes being defined by a set of nodes and segments of a given index;
- a calculation unit designed for identifying a plurality of routes enabling each to connect the points of departure and arrival;
- means of elimination, first for identifying at least one elimination level or threshold and secondly for eliminating at least one portion of the basic set of data whose index is below said elimination level or threshold;
said method comprising the following steps:
- in order to determine the route, a plurality of potential routes is identified from which one route is selected according to given criteria;
- the plurality of routes is identified by selecting a first modelling element of the road network, preferably a node, close to the point of departure, and a second modelling element of the road network, preferably a node, close to the point of arrival, identifying a plurality of routes, each consisting of a plurality of route elements connected from the first element to the second element, and searching for at least one intermediate element for each of said routes in said set of road network modelling elements;
- using the calculation unit, the nodes surrounding said departure node and said arrival node are scanned via the segments, so as to determine the cost of each of these nodes;
- said scanning is continued until a selected route is reached;
said method being **characterized by** the following steps:
a) during said scanning, the nodes are scanned so as to identify the nodes that can be used to form a mesh with a given starting index Id;
b) when a mesh with an index Id is identified, using said means of elimination, the segments whose index is less than this index Id are eliminated;
c) scanning the nodes continues so as to identify the nodes that can be used to form a new mesh, whose index Is is greater than that of the preceding mesh;
d) segments whose index is less than this new index Is are eliminated;
e) steps c and d are repeated until a maximum index Im of elimination is reached, so that a network level is eliminated as soon as all the nodes forming the network scanning boundary have an index greater than the given network level.

2. Method of determining routes according to Claim 1, **characterized in that** the nodes are scanned so as to progressively form meshes whose index increases regularly.

3. Method of determining routes according to either of Claims 1 and 2, **characterized in that** the index of a subsequent mesh corresponds to the index following that of the immediately preceding mesh.

4. Method of determining routes according to one of the preceding claims, **characterized in that** the importance index of a node corresponds to the highest index of the incident segments.

5. Method of determining routes according to one of Claims 1 to 4, in which scanning the nodes is carried out using Dijkstra's algorithm.

6. Method of determining routes according to one of Claims 1 to 4, in which scanning the nodes is carried out using FORD's algorithm.

7. Software comprising code elements programmed for implementing the method according to one of the preceding claims, when said software is loaded into a computer system and executed by said computer system.

8. Software according to Claim 7, in the form of a product recorded onto a machine-readable medium, comprising programmed code elements.
